# EUROPÄISCHE PATENTSCHRIFT

(11) **EP 3 700 758 B1**
(45) Veröffentlichungstag und Bekanntmachung des Hinweises auf die Patenterteilung: **29.09.2021**
(21) Anmeldenummer: 18800848.6
(22) Anmeldetag: 25.10.2018
(51) Int. Cl.: B60B 5/02

(54) **FAHRZEUGRAD**
VEHICLE WHEEL
ROUE DE VÉHICULE

(30) Priorität: 28.10.2017 DE 102017125350
(43) Veröffentlichungstag der Anmeldung: 02.09.2020
(73) Patentinhaber: ThyssenKrupp Carbon Components GmbH, 01723 Wilsdruff STT Kesselsdorf (DE)
(72) Erfinder: WERNER, Jens, 01640 Coswig (DE); KÖHLER, Christian, 01099 Dresden (DE); FRANKE, Michael, 01239 Dresden (DE); FRANKE, Florian, 01127 Dresden (DE); DRESSLER, Michael, 01159 Dresden (DE); MÄKE, Sandro, 01796 Dohma (DE); BARTSCH, André, 01159 Dresden (DE)
(74) Vertreter: thyssenkrupp Intellectual Property GmbH
(86) Internationale Anmeldenummer: PCT/DE2018/100873
(87) Internationale Veröffentlichungsnummer: WO 2019/080970

(56) Entgegenhaltungen:
- WO-A1-2016/097159
- WO-A1-2016/168899
- DE-A1-102005 053 799
- DE-A1-102013 202 271

## Beschreibung

Die Erfindung betrifft ein Fahrzeugrad, welches mit einer Bremsanlage verbindbar ist und dessen Radfelge und / oder Radscheibe eine Tragstruktur aus faserverstärktem Kunststoff aufweist. Ein zum Stand der Technik gehörendes Beispiel ist in Dokument WO 2016/168899 A1 offenbart.

Die Erfindung bezieht sich auf Fahrzeugräder, bei denen die Radfelge und die Radscheibe jeweils faserverstärkten Kunststoff aufweisen, oder sogenannte Hybrid-Fahrzeugräder, bei denen eines der Fahrzeugrad-Bauteile aus einen anderen Material, wie z. B. aus Leichtmetall, besteht.

Die Radscheibe kann ausgehend von einer Radnabe einerseits geschlossen, scheibenförmig oder offen sternförmig mit Speichen ausgebildet sein, wobei die Speichen in einem Radkranz der Radscheibe enden oder unmittelbar mit einer Radfelge verbunden sind, welche die Radscheibe umfasst.

Über die Radnabe der Radscheibe ist das Fahrzeugrad mit einer Bremsanlage verbindbar.

Fahrzeugräder werden insbesondere während des Bremsvorgangs durch die Bremsanlage eines Kraftfahrzeugs mit hohen thermischen Lasten beaufschlagt, die infolge der Umwandlung der kinetischen Energie in Wärmeenergie entsteht. Bei Bremsanlagen mit beispielsweise Scheibenbremsen können hierbei Betriebstemperaturen bis zu 1000°C auftreten.

Die thermischen Lasten werden hauptsächlich durch Konvektion und Wärmestrahlung auf das Fahrzeugrad übertragen. Dabei sind besonders die der Bremsanlage, insbesondere der Bremsscheibe, nahegelegenen Bereiche der Radscheibe und der Radfelge besonders hohen thermischen Belastungen ausgesetzt.

Während Radscheiben oder Radfelgen aus Metall diesen thermischen Belastungen standhalten, geraten Radscheiben oder Radfelgen aus faserverstärktem Kunststoff oder mit Bestandteilen aus faserverstärktem Kunststoff infolge dieser thermischen Beanspruchung, u. a. wegen der geringen Temperaturresistenz des Matrixmaterials, an ihre Belastungsgrenzen. So sinken die mechanischen Eigenschaften, wie Festigkeit und Steifigkeit, infolge der thermisch bedingten Erweichung des Harzsystems, was u. a. zu unerwünschten Beschädigungen der Bauteile führen kann.

Aus der Druckschrift WO 2016/097159 ist ein Fahrzeugrad aus faserverstärktem Kunststoff bekannt, welches zum thermischen Schutz der Tragstruktur aus faserverstärktem Kunststoff eine Wärmeschutzstruktur aufweist, welche aus einer Kombination aus zumindest einer wärmereflektierenden Schicht an der Oberfläche des Fahrzeugrades und einer darunter befindlichen gering wärmeleitende (isolierende) und/oder wärmeleitende Schicht besteht.

Die Wärmeschutzstruktur ist abschnittsweise oberflächennah auf der Tragstruktur des Fahrzeugrades angeordnet oder in diese eingebettet.

Die wärmereflektierende Schicht besteht aus Metall oder einem keramischen Material. Die gering wärmeleitfähige (isolierende) Schicht besteht aus einem faserverstärkten Kunststoff oder einem Keramikmaterial oder aus einer Kombination hiervon. Die wärmeleitende Schicht besteht aus einem Metallblech, -gitter oder -gewebe bzw. aus einer Metallfolie.

Der Wärmeenergieeintrag soll einerseits durch die wärmereflektierende Schicht gemindert werden, wobei durch die darunter befindliche gering wärmeleitende (isolierende) Schicht eine Wärmeisolation (thermische Barriere) gegenüber der Tragstruktur aus faserverstärkten Kunststoff erfolgen soll.

Eine alternativ zwischen wärmereflektierender Schicht und gering wärmeleitender (isolierender) Schicht eingebettete, wärmeleitende Schicht, soll den Wärmeenergieeintrag über einen größeren Bereich der isolierenden und reflektierenden Schicht der abschnittsweisen Wärmeschutzstruktur verteilen.

Der Grad des Wärmeschutzes ist maßgeblich von der Reflexionsgüte bzw. Isolationsgüte der jeweiligen Wärmeschutzschichten und damit von deren Material, lokalen Anordnung und Wandstärke abhängig. Infolge dessen müssen erhöhte Massen, bzw. ungleichmäßig verteilte Massen am Fahrzeugrad in Kauf genommen.

Zusätzlich besteht die Gefahr, dass sich infolge der betriebsbedingten Temperaturwechselzyklen und unterschiedlichen Materialien und Temperaturausdehnungskoeffizienten der Wärmeschutzschichten untereinander und zu der Tragstruktur des Fahrzeugrades aus Faserverbundmaterial die Schichten von der Tragstruktur ablösen können.

Wärmetechnisch ergibt sich durch diese Ausführung einer außenliegenden Reflektionsschicht in Kombination mit einer isolierenden und wärmeleitenden Schicht eine nachteilige Beeinflussung des Wärmeemissionsvermögens der Wärmeschutzstruktur, da der Anteil der in die außenliegende Reflexionsschicht eingetragenen thermischen Last durch das Reflexionsvermögen der Reflektionsschicht auch nach innen reflektiert wird, wobei die Reflexionsschicht eine thermische Barriere nach außen bildet; die Wärme kann somit nicht ausreichend abgeführt werden, was in weiterer Folge der örtlich begrenzt angeordneten Wärmeschutzstruktur zu einer ungünstigen lokalen Erhitzung des Fahrzeugrad führt.

Des Weiteren ist nachteilig, dass eine nicht ausbleibende Verschmutzung des Fahrzeugrades und damit der außenliegenden wärmereflektierenden Schicht bewirkt, dass der ursprünglich vorhandene, nach außen gerichtete Reflektionsgrad deutlich absinkt, wonach das Fahrzeugrad zunehmend mehr Wärme aufnimmt. Der Erfindung liegt die Aufgabe zugrunde, die Einsatzmöglichkeit von Fahrzeugrädern der genannten Art in Kraftfahrzeugen zu erweitern und zu verbessern, insbesondere durch geringere thermische Belastung eine dauerhafte Betriebszuverlässigkeit der Fahrzeugräder zu gewährleisten.

Die Aufgabe wird erfindungsgemäß mit einem Fahrzeugrad nach Anspruch 1 gelöst, wobei die Radfelge und / oder die Radscheibe zumindest auf einer der Bremsanlage zugewandten Seite der Tragstruktur eine Thermofunktionsstruktur aufweist, welche thermisch leitfähiger als die Tragstruktur ausgebildet ist und derart erstreckt angeordnet ist, dass eine durch die Bremsanlage erzeugte Wärmeenergie im Wesentlichen aus einem hierdurch thermisch hochbelasteten Bereich der Radfelge und / oder der Radscheibe bis in mindestens einen thermisch geringer belasteten Bereich der Radfelge und / oder der Radscheibe abgeführt wird.

Die gegenüber der Tragstruktur thermisch leitfähigere Thermofunktionsstruktur ist auf der Oberfläche der Tragstruktur aufgebracht und gezielt weitreichend über die Oberfläche der Tragstruktur der Radfelge und / oder der Radscheibe erstreckt ausgebildet.

Die Erfindung bezweckt die unter der Thermofunktionsstruktur befindliche bzw. von der Thermofunktionsstruktur verdeckte Tragstruktur der Radfelge bzw. der Radscheibe aus Faserverbundmaterial vor unerwünschter, lokal überhöhter thermischer Belastung zu schützen, welche durch die in der Bremsanlage erzeugte Wärmeenergie insbesondere während des Bremsvorgangs und in der nachfolgenden Standphase des Kraftfahrzeugs entsteht. Zu den in der Bremsanlage sich besonders erhitzenden Teilen gehört z. B. die Bremsscheibe.

Mittels der flächig erstreckten Thermofunktionsstruktur wird die durch die Bremsanlage erzeugte Wärmeenergie wechselseitig von dem jeweils hierdurch thermisch hochbelasteten Bereich der Radfelge bzw. der Radscheibe (lokaler Wärmeeinleitungsbereich) in mindestens einen, vorzugsweise mehreren von der Bremsanlage thermisch geringer belasteten Bereichen der Radfelge bzw. der Radscheibe (Wärmeausleitungsbereich(e)) abgeführt.

Durch die höhere thermische Leitfähigkeit der Thermofunktionsstruktur gegenüber der Tragstruktur wird die Wärmeenergie vornehmlich und gezielt entlang der Erstreckung der Thermofunktionsstruktur geleitet.

Der Erfindung liegt zudem die Erkenntnis zugrunde, dass beispielsweise in einer aktiven Bremsphase des Kraftfahrzeugs, insbesondere während andauernder, schnell wechselnder Beschleunigungs- und Bremsmanöver, eine permanente und sehr hohe thermische Belastung durch im Wesentlichen Wärmestrahlung hauptsächlich auf die Radscheibe und in einem zu den hocherhitzen Teilen der Bremsanlage, wie der Bremsscheibe, nahe beabstandeten Bereich der Radscheibe (Hotspot-Bereich - Radscheibe) erfolgt; wogegen die zu den hocherhitzen Teilen der Bremsanlage entfernter beabstandeten und abgewandten Bereiche der Radscheibe sowie die Radfelge mit dem Felgenbett in dieser Betriebsphase gegenüber dem Hotspot-Bereich der Radscheibe unter Unterstützung der fahrtbedingten Luftströmungen geringer thermisch belastet werden.

Dagegen liegt in der Standphase des Kraftfahrzeugs, unmittelbar nach einem Brems- und Fahrbetrieb, die hauptsächliche thermische Belastung im Wesentlichen durch Wärmestrahlung und durch Konvektion, in einem zu den hocherhitzen Teilen der Bremsanlage nahe beabstandeten Bereich des Felgenbetts der Radfelge, insbesondere im Tiefbett des Felgenbetts (Hotspot-Bereich - Felgenbett); wogegen wiederum die zu den hocherhitzen Teilen der Bremsanlage entfernter beabstandeten und abgewandten Bereiche der Radfelge sowie die Radscheibe in dieser Betriebsphase gegenüber dem Hotspot-Bereich des Felgenbetts aufgrund der in der Standphase erzeugten vertikalen Luftströmung entlang des Fahrzeugrades infolge der eintretenden, thermische Konvektion weniger thermisch beansprucht werden.

Diese unterschiedlichen thermischen Wirkungen der Fahrzeug-Betriebsphasen auf das Fahrzeugrad sind besonders bei einer Radscheibe, die als Radstern mit Speichen ausgebildet ist, feststellbar; aber auch bei anderen Varianten der Radscheibe, wie z. B. bei geschlossen-flächigen, tellerförmigen Radscheiben, zutreffend.

Diese thermischen Wirkungen aus den verschiedenen Fahrzeug-Betriebsphasen macht sich die Erfindung nach Anspruch 1 zunutze, um durch die erfindungsgemäße Ausführung und Erstreckung der Thermofunktionsstruktur die Wärmeenergie aus der Bremsanlage, welche in ihrer unmittelbaren Umgebung eine hohe Umgebungstemperatur und Wärmestrahlungsbelastung erzeugt, lokal über den jeweiligen Hotspot-Bereich der Radfelge bzw. Radscheibe aufzunehmen (lokaler Wärmeeinleitungsbereich der Thermofunktionsstruktur), die Wärmenergie mittels der hohen Wärmeleitfähigkeit der Thermofunktionsstruktur sehr effizient in die jeweils geringer thermisch belasteten Bereiche der Radfelge bzw. Radscheibe abzuleiten und in eine geringer temperierte Umgebung der Radfelge bzw. der Radscheibe abzugeben (Wärmeausleitungsbereich(e) der Thermofunktionsstruktur). Die Funktion der Thermofunktionsstruktur kann dabei entsprechend des unterschiedlich bewirkten lokalen Wärmeenergieeintrages in den verschiedenen Fahrzeug-Betriebsphasen wechselseitig gerichtet sein.

Es wurde festgestellt, dass sich die unter der Thermofunktionsstruktur liegende bzw. die von der Thermofunktionsstruktur verdeckte Tragstruktur der Radfelge bzw. der Radscheibe deutlich weniger erwärmt, als bei Ausführungen nach dem Stand der Technik, so dass deren thermische Last im Interesse des Materialschutzes gemindert ist, was die Betriebszuverlässigkeit der Fahrzeugteile (Radfelge, Radscheibe) erheblich verbessert.

Vorteilhafte Ausgestaltungen und Weiterbildungen der Erfindungen gehen aus den abhängigen Patentansprüchen, der nachfolgenden Beschreibung und den zugehörigen Zeichnungen hervor.

Nach einer vorteilhaften Ausführungsform ist die Thermofunktionsstruktur hoch-wärmeleitend ausgebildet.

Die thermisch hoch-leitende Eigenschaft der Thermofunktionsstruktur führt zu einer noch effizienteren Wärmeableitung in die thermisch geringer belasteten Bereiche der Radfelge bzw. der Radscheibe, wodurch die notwendige Schichtdicke der Thermofunktionsstruktur zu Gunsten der Masse-Anforderungen an das Leichtbau-Fahrzeugrad minimiert werden kann und zugleich die Tragstruktur der Radfelge bzw. der Radscheibe effizient vor übermäßiger thermischer Belastung geschützt wird.

Eine Thermofunktionsstruktur, welche thermisch hoch-leitfähig ausgebildet ist, weist eine Wärmeleitfähigkeit mit einem Wärmeleitkoeffizienten im Bereich von etwa 100 bis 1100 W/mK auf.

Als Materialien oder Materialverbände für die thermisch hoch-leitfähige Thermofunktionsstruktur, sind beispielsweise Kupferfolie oder -geflecht geeignet.

Nach einer besonders vorteilhaften Ausführungsform ist die Thermofunktionsstruktur im Infrarot-Wellenbereich strahlungsabsorbierend und -emittierend ausgebildet.

Mittels der besonderen Strahlungsabsorptionsfähigkeit der Thermofunktionsstruktur kann die Wärmeenergie aus der Bremsanlage direkt im jeweiligen Hotspot-Bereich der Radfelge bzw. Radscheibe (lokaler Wärmeeinleitungsbereich der Thermofunktionsstruktur)unmittelbar als Wärmestrahlung absorbiert werden und mittels der thermischen Leitfähigkeit der Thermofunktionsstruktur - entsprechend der Betriebszustände wechselseitig gerichtet - in die jeweils geringer thermisch belasteten Bereiche der Radfelge bzw. Radscheibe abgeleitet und mittels der Strahlungsemissionsfähigkeit der Thermofunktionsstruktur in die nieder temperierte Umgebung der Radfelge bzw. der Radscheibe abgestrahlt werden (Wärmeausleitungsbereich(e) der Thermofunktionsstruktur).

Somit übernimmt die Thermofunktionsstruktur der Radfelge bzw. der Radscheibe universell mehrere thermische Funktionen.

Dabei geht die Erfindung weiter davon aus, dass die durch die Bremsanlage erzeugte Strahlung hauptsächlich als Wärmestrahlung im langwelligen, nicht sichtbaren Infrarot-Wellenbereich vorliegt. Einer Wärmestrahlung im Infrarot-Wellenbereich ist mit einer Wellenlänge von ca. 780 nm bis 100 µm charakterisiert.

Ein insbesondere im Infrarot-Wellenbereich strahlungsabsorbierendes und -emittierendes Material der Thermofunktionsstruktur kann daher die auf die Radscheibe bzw. auf die Radfelge einwirkende Wärmestrahlung besonders gut absorbieren und wieder abgeben.

Insbesondere in Kombination der vorteilhaften Absorptions- und Emissionseigenschaften im Infrarot-Wellenbereich mit den vorteilhaften Wärmeleiteigenschaften der universellen Thermofunktionsstruktur kann die Wärmeenergie effizient innerhalb der Thermofunktionsstruktur aufgenommen, in Längserstreckung der Thermofunktionsstruktur abgeleitet und in weniger thermisch belastete Bereiche verteilt und wieder ausgegeben werden.

Die unter der Thermofunktionsstruktur liegende bzw. die von der Thermofunktionsstruktur verdeckte Tragstruktur der Radfelge bzw. der Radscheibe wird hierdurch noch weniger erwärmt, , so dass deren thermische Belastung noch weiter gesenkt werden kann.

Zudem wird die Wirkungsweise der Thermofunktionsstruktur durch äußere Einflüsse aus der Umgebung, wie z. B. Verschmutzung der Oberfläche des Fahrzeugrades, kaum beeinflusst, da die Wärmeleiteigenschaften der Thermofunktionsstruktur prinzipiell nicht vom Verschmutzungsgrad der Oberfläche abhängig sind und die Absorptions- und Emissionseigenschaften der im Infrarot-Wellenbereich fungierenden Thermofunktionsstruktur durch Verschmutzung der Oberfläche allenfalls nur sehr gering veränderlich sind.

Als Materialien oder Materialverbände für die universelle Thermofunktionsstruktur, welche die vorteilhaften Eigenschaften der Wärmeleitfähigkeit und der Strahlungsabsorption und Strahlungsemission im Infrarot-Wellenbereich vereinen, sind beispielsweise eloxiertes Aluminiumblech oder -geflecht oder eine schwarz beschichtete Aluminiumfolie geeignet.

Die zusätzlich hoch-wärmeleitende Eigenschaft der Thermofunktionsstruktur steigern die vorbeschriebenen Vorteile durch eine noch effizientere Wärmeableitung in die thermisch geringer belasteten Bereiche der Radfelge bzw. der Radscheibe zum Schutze der Tragstruktur der Radfelge bzw. der Radscheibe vor übermäßiger thermischer Belastung bei zugleich geringer Schichtdicke der Thermofunktionsstruktur .

Als erfindungsgemäß geeignete Materialien oder Materialverbände für die universelle Thermofunktionsstruktur, welche neben den beanspruchten Absorptions-/Emissionseigenschaften zudem hoch-wärmeleitfähig ist, können beispielsweise eine schwarze Magnesium-Beschichtung oder ein Kautschuk-Silbergeflecht angewandt werden.

Besonders vorteilhaft ist es, wenn die Thermofunktionsstruktur Kohlenstofffasern enthält.

Die Kohlenstofffasern weisen zum einen je nach Fasertyp eine gute Wärmeleitfähigkeit (z.B. PAN (Polyacrylnitril)-basierte Kohlenstofffasern) bzw. eine sehr gute bis hohe Wärmeleitfähigkeit auf (z.B. hochmodulige Kohlenstofffasern, Pechbasierte Kohlenstofffasern).

Hoch-wärmeleitende Kohlenstofffasern weisen eine Wärmeleitfähigkeit wie etwa Kupfer und höher auf; deren Wärmeleitfähigkeit ist mit einem Wärmeleitkoeffizient in einem Bereich von 140 bis 1100 W/mK bestimmt.

Zudem wird durch den Einsatz von Kohlenstofffasern gegenüber Metallfasern unerwünschte Korrosion im Zusammenwirken mit der Tragstruktur der Radfelge und / oder Radscheibe aus faserverstärktem Kunststoff vermieden.

Je größer der Anteil Kohlenstofffasern in der Thermofunktionsstruktur ist, umso günstiger wirken sich deren vorstehend genannten Vorzüge auf den Schutz der Tragstruktur und damit auf die Betriebszuverlässigkeit des Fahrzeugrad aus.

Aufgrund ihrer hohen Zugfestigkeit, Steifigkeit und geringen Masse sind Kohlenstofffasern zum anderen vorteilhaft als Verstärkungsfasern zur Unterstützung der Tragfunktion der Faserverbund-Tragstruktur der Radfelge und / oder Radscheibe geeignet.

Die zur Funktionsstabilität notwendige Masse der Tragstruktur der Radfelge und / oder Radscheibe kann bei der Verwendung von Kohlenstoffasern in der Thermofunktionsstruktur folglich reduziert werden.

Damit erweitern sich die Funktionen der Thermofunktionsstruktur in sehr vorteilhafter Weise zusätzlich auf eine mechanische Tragfunktion der Radfelge und / oder Radscheibe aus Faserverbundmaterial, was zu einer günstigen Materialminimierung führt.

Nach einer besonders vorteilhaften Ausgestaltung ist die Thermofunktionsstruktur als ein sogenannter realer Schwarzer Körper ausgebildet.

Ein nach physikalischer Definition als idealer "Schwarzer Körper", auch "Schwarzer Strahler" genannt, absorbiert sämtliche auftreffende elektromagnetische Strahlung, somit auch Licht und Wärmestrahlung, vollständig mit einem Strahlungsabsorptionsvermögen von 1. Er sendet die elektromagnetische Strahlung wiederum vollständig als Wärmestrahlung aus. Intensität und spektrale Verteilung der Wärmestrahlung hängen nur von der Temperatur des Schwarzen Körpers und dessen Umgebungstemperatur ab.

In der Praxis ist ein Strahlungsabsorptionsvermögen von 1 nicht erreichbar, es wird immer ein Teil der auftreffende elektromagnetische Strahlung reflektiert. Bei derartigen Körpern liegt ein praktisch erreichbares Strahlungsabsorptionsvermögen annähernd 1 vor, welche als "Reale Schwarze Körper" bezeichnet werden.

Die Erfindung nach dieser Ausführung macht sich die Eigenschaften des realen Schwarzen Strahlers zu nutze. Die auf der der Thermofunktionsstruktur direkt auftreffende Wärmestrahlung wird von dieser nahezu vollständig absorbiert, effektiv verteilt, in thermisch geringer belastete Bereiche abgeleitet und dort infolge der höheren Temperaturdifferenz als Wärmestrahlung vornehmlich in Richtung der Umgebung abgestrahlt.

Die unter der Thermofunktionsstruktur liegende bzw. die von der Thermofunktionsstruktur verdeckt liegende Tragstruktur der Radfelge bzw. der Radscheibe erwärmt sich infolge der besonders wirksamen Wärmestrahlungsabsorption der Thermofunktionsstruktur in thermisch hoch belasteten Bereichen und der ebenso wirksamen Strahlungsemission der Wärmestrahlung in thermisch gering belasteten Bereichen, nur sehr gering, so dass materialschädigende thermische Lasten in der Tragstruktur der Radfelge bzw. der Radscheibe zuverlässig vermieden sind. Auf Isolierungs-Maßnahmen an der Tragstruktur kann daher grundsätzlich verzichtet werden.

Als Material bzw. Materialverband für eine Thermofunktionsstruktur, die als realer schwarzer Strahler ausgebildet ist, sind beispielsweise eloxiertes Metallblech, in schwarzes Silikon eingelassene Goldfasern oder schwarz lackierte Silberfolie geeignet.

Gemäß einer bevorzugten Ausgestaltung der Erfindung weist die Thermofunktionsstruktur Pech-basierte Kohlenstofffasern auf.

Diese Kohlenstofffasern bestehen vorzugsweise aus langkettigen Kohlenstoffatomen mit Kohlenstoff-Netzebenen entlang der Faserachse und werden auf der Basis von bituminösen Rückständen (Pech) aus der Teerdestillation gewonnen. Das Pech wird unter besonderer Hydrierungsbehandlung geschmolzen, versponnen und carbonisiert, wodurch die besondere Orientierung und Verstreckung der Kohlenstoff-Vernetzung erreicht wird.

Die Pech-basierten Kohlenstofffasern vereinen alle vorstehend genannten vorteilhaften Eigenschaften und Vorzüge der Thermofunktionsstruktur: Sie sind hoch-wärmeleitend, weisen neben einer ausreichende Festigkeit auch eine hohe Steifigkeit auf, um materialminimierend als Tragstruktur der Radfelge bzw. Radscheibe zu dienen, und können als reale Schwarze Strahler fungieren.

Je größer der Anteil der Pech-basierten Kohlenstofffasern in der Thermofunktionsstruktur ist, umso günstiger wirken sich die vorstehend genannten Eigenschaften vorteilhaft auf den Schutz der Tragstruktur und damit auf eine dauerhafte Betriebszuverlässigkeit des Fahrzeugrades aus.

Neben den vorstehenden beschriebenen Eigenschaften weisen die Pech-basierten Kohlenstofffasern auch eine sehr gute Temperaturbeständigkeit auf, so dass dies einer dauerhaften Betriebssicherheit des Fahrzeugrades zusätzlich förderlich ist.

Es ist technisch denkbar wenn auch wirtschaftlich nicht sinnvoll, dass der faserverstärkte Kunststoff der Radfelge und / oder der Radscheibe vollständig auf der Basis von Pechbasierten Kohlenstofffasern hergestellt ist, womit die notwendige Tragstruktur und die Thermofunktionsstruktur der Radfelge und / oder der Radscheibe masseminimierend in einer homogenen Struktur kombiniert sind. Bei dieser Ausführung erübrigen sich explizite, thermische Schutzmaßnahmen für die Tragstruktur, so dass keine weiteren Materialien und Massen für ein funktionsgerechtes Leichtbau-Fahrzeugrad mit zugleich hoher Betriebszuverlässigkeit notwendig sind. Der praktischen Anwendung dieser Ausführung steht jedoch der erforderliche mengenmäßige Umfang an Pech-basierten Kohlenstofffasern und der damit verbundene hohe wirtschaftliche Aufwand entgegen.

Nach einer vorteilhaften Ausführungsform ist die Thermofunktionsstruktur aus einem Fasergewebe, Fasergewirk oder einem Fasergelege gebildet.

Hierbei können die thermisch relevanten Materialen, faserförmig oder bandförmig, wie zum Beispiel die Kohlenstofffasern oder Metallfasern, in Reinform oder mit anderen Materialien, wie z.B. sonstige Kunststofffasern, in das Gewebe, Gewirk oder Gelege eingewebt oder eingebettet sein, womit entsprechend der individuellen Anforderungen eine gleichmäßige und/oder partielle Verteilung der thermischen Eigenschaften in der Thermofunktionsstruktur realisiert werden kann. Die Textilstruktur ermöglicht zudem eine bewusst gerichtete Anordnung der thermisch relevanten Faser- bzw. Bandmaterialien. Somit kann die Wärmeenergieverteilung und die Wärmeableitung entlang der Thermofunktionsstruktur gezielt gelenkt werden.

Die Ausführung als Gewebe, Gewirk oder Gelege erleichtert zudem das genaue Anlegen bzw. Anformen der Thermofunktionsstruktur an die Kontur der Tragstruktur der Radscheibe bzw. der Radfelge und verbessert so die Wirkungsweise der Thermofunktionsstruktur.

Ist das Fasergewebe, Fasergewirk oder das Fasergelege elastisch ausgebildet, kann die Ausrichtung und Positionierung der thermisch relevanten Materialen beim Aufbringung der Thermofunktionsstruktur noch flexibler erfolgen.

Die elastische Ausbildung des Fasergewebes, Fasergewirkes bzw. des Fasergeleges, insbesondere die Verwendung von elastischen Stützfäden, ermöglicht es, bei deren Anformung Konturänderungen, z.B. bei Entformungsschrägen oder radialen Stufungen der Radfelge, unter Beibehaltung der Faserorientierung der thermisch leitfähigen Fasern der Thermofunktionsstruktur ausgleichen zu können.

Eine besonders günstige Ausgestaltung der Erfindung sieht vor, dass eine Thermofunktionsstruktur der Radfelge und eine Thermofunktionsstruktur der Radscheibe miteinander verbunden sind. Somit kann die Wärmeenergie je nach Betriebsfall weitläufig von einer Oberfläche der Radfelge auf eine Oberfläche der Radscheibe und umgekehrt verteilt werden.

Nach einer weiteren günstigen Ausgestaltung ist vorgesehen, dass sich die Thermofunktionsstruktur der Radscheibe und / oder der Radfelge bis in eine oder bis zu einer der Bremsanlage abgewandten Seite der Radscheibe und / oder der Radfelge erstreckt.

Die Erstreckung der Thermofunktionsstruktur kann bei der Radfelge beispielsweise bis auf oder in die Außenseite des Felgenhorns erfolgen.

Die Erstreckung der Thermofunktionsstruktur kann bei der Radscheibe bis beispielsweise in oder auf die Außenseite des Radkranzes, des Radtellers oder der Speichen der Radscheibe bzw. des Radsterns erfolgen.

Insofern können solche, durch die Bremsanlage thermisch gering bzw. unbelasteten Bereiche der Radfelge bzw. der Radscheibe, effizient zur Abführung der Wärmeenergie in die niedriger temperierte Umgebung der Radfelge bzw. der Radscheibe genutzt werden.

Von der Erfindung ist es mit umfasst, dass die jeweiligen Thermofunktionsstrukturen die Oberfläche der Radfelge und / oder der Radscheibe vollständig bedecken können oder eine geometrische Kontur der Radfelge und / oder der Radscheibe vollständig umschließen können.

Unter insbesondere der Verwendung von Hybrid-Fahrzeugrädern kann es vorteilhaft vorgesehen sein, dass die Thermofunktionsstruktur der Radscheibe und / oder der Radfelge mit einer wärmeleitenden Komponente des Fahrzeugrades verbunden ist.

Wärmeleitende Komponenten des Fahrzeugrades können beispielsweise eine metallische Radnabe, ein metallisches Radkranz, einzelne metallische Speichen, eine lokale Metallschicht auf der Radfelge oder Radscheibe oder eine komplett metallische Radfelge oder Radscheibe sein.

Durch die Verbindung mit der Thermofunktionsstruktur kann die durch die Thermofunktionsstruktur übertragene Wärmeenergie an die wärmeleitende Komponente des Fahrzeugrades weiter geleitet werden, die durch ihre geometrische Erstreckung bzw. Masse zu einer weiteren effizienten Wärmeverteilung über das Fahrzeugrad beitragen kann.

Für einen Schutz der Thermofunktionsstruktur gegen Umwelteinflüsse und als ästhetisches Gestaltungsmittel für das Fahrzeugrad kann es als zweckmäßig vorgesehen sein, dass die Thermofunktionsstruktur der Radfelge und / oder die Thermofunktionsstruktur der Radscheibe zumindest bereichsweise eine Deckschicht aufweist.

Die Deckschicht übernimmt die Funktion der Wärmeabsorption und gibt die Wärme an die Thermofunktionsstruktur ab, welche in dem durch die Deckschicht abgedeckten Bereich vorrangig eine wärmeleitende Funktion übernimmt.

In nicht durch die Deckschicht abgedeckten Bereichen kann die Thermofunktionsstruktur wiederum als wärmeleitende und wärmeabsorbierende /-emittierende Thermofunktionsstruktur ausgebildet sein, um die Wärmeverteilung und -abführung lokal zu verstärken.

Vorzugsweise besteht die wärmeabsorbierende Deckschicht aus einem wärmeresistenten Material, das z.B. ein thermisch resistenter Lack sein kann. Ferner ist auch eine Faserverbundschicht denkbar, deren thermische Belastung für die Tragfähigkeit des Bauteils (Radfelge/Radscheibe) keine Bedeutung hat.

Für ebensolche Zwecke kann es vorgesehen sein, dass die Thermofunktionsstruktur der Radfelge und / oder der Radscheibe zumindest bereichsweise eine Infrarot-strahlungsdurchlässige Deckschicht aufweist.

Diese spezielle Infrarot-strahlungsdurchlässige Deckschicht ist besonders geeignet für den Schutz und die Gestaltung der universell ausgebildeten Thermofunktionsstruktur, welche wärmeleitend und zusätzlich im Infrarot-Wellenbereich strahlungsabsorbierend und -emittierend ausgebildet ist. Als derart zweckdienliche Deckschicht ist beispielsweise eine PE-Folie geeignet, die transparent oder blickdicht eingefärbt sein kann.

Diese und weitere aus den Patentansprüchen, der Beschreibung der Ausführungsbeispiele und den Zeichnungen hervorgehenden Merkmale können jeweils für sich oder in Kombination als vorteilhafte Ausführungsformen der Erfindung verwirklicht sein, für die hier Schutz beansprucht wird.

Das erfindungsgemäße Fahrzeugrad wird nachfolgend an mehreren Ausführungsbeispielen näher erläutert. Die zugehörigen Zeichnungen zeigen in einer schematischen Darstellung in
- Fig. 1: isometrische Darstellung eines Fahrzeugrades mit einer Radfelge und einem Radstern aus faserverstärktem Kunststoff und je einer Thermofunktionsstruktur an Radfelge und Radstern,
- Fig. 1a: Schnittansicht des Fahrzeugrades nach Fig. 1 in Schnittebene A,
- Fig. 1b: Schnittansicht eines Fahrzeugrades ähnlich nach Fig. 1 in Schnittebene A mit verbundener Thermofunktionsstruktur an Radfelge und Radstern,
- Fig. 1c: Schnittansicht eines Fahrzeugrades ähnlich nach Fig. 1 in Schnittebene A mit einander übergehender Thermofunktionsstruktur an Radfelge und Radstern,
- Fig. 2: Schnittansicht eines Fahrzeugrades ähnlich der Fig. 1 mit einem alternativen Radstern,
- Fig. 2a: Explosions-Schnittdarstellung einer Radfelge des Fahrzeugrades nach Fig. 2 mit einer Thermofunktionsstruktur,
- Fig. 3: Schnittansicht eines Fahrzeugrades ähnlich der Fig. 1 mit verbundener Thermofunktionsstruktur an Radfelge und um den gesamten Radstern,
- Fig. 3a: Schnittansicht des Fahrzeugrades nach Fig. 3 durch den Speichenquerschnitt,
- Fig. 4: Schnittansicht eines Fahrzeugrades ähnlich der Fig. 1 mit einer Thermofunktionsstruktur und einer Infrarotstrahlungsdurchlässigen Deckschicht an Radfelge und Radstern,

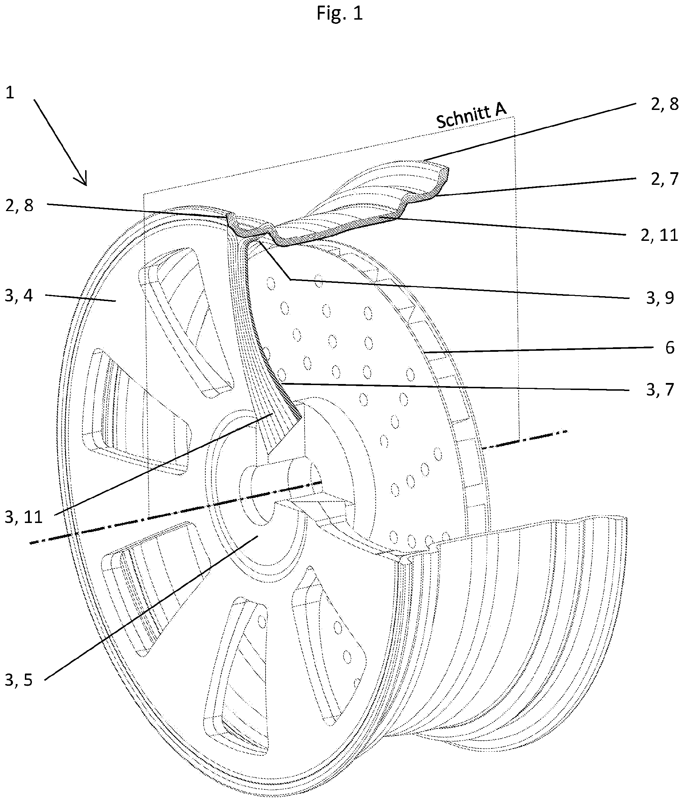

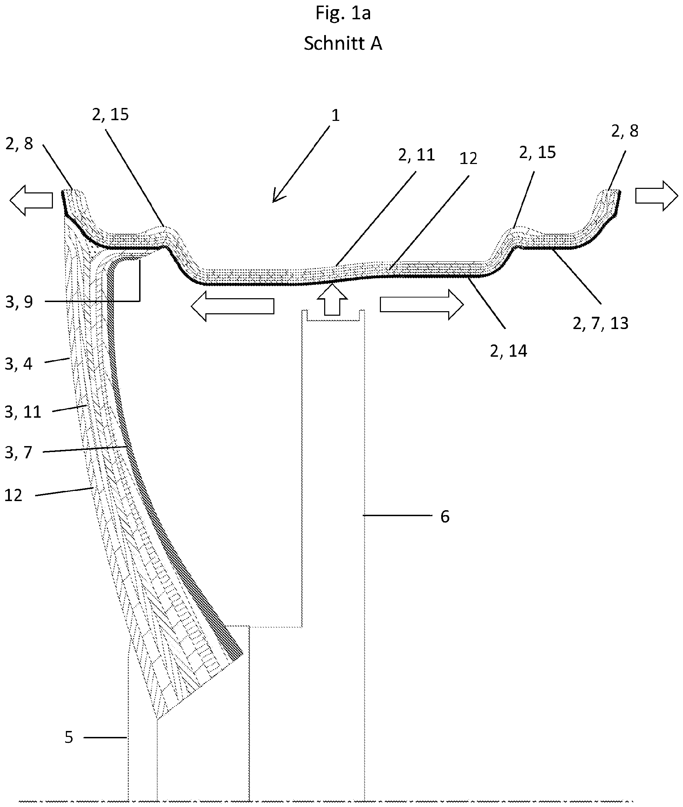

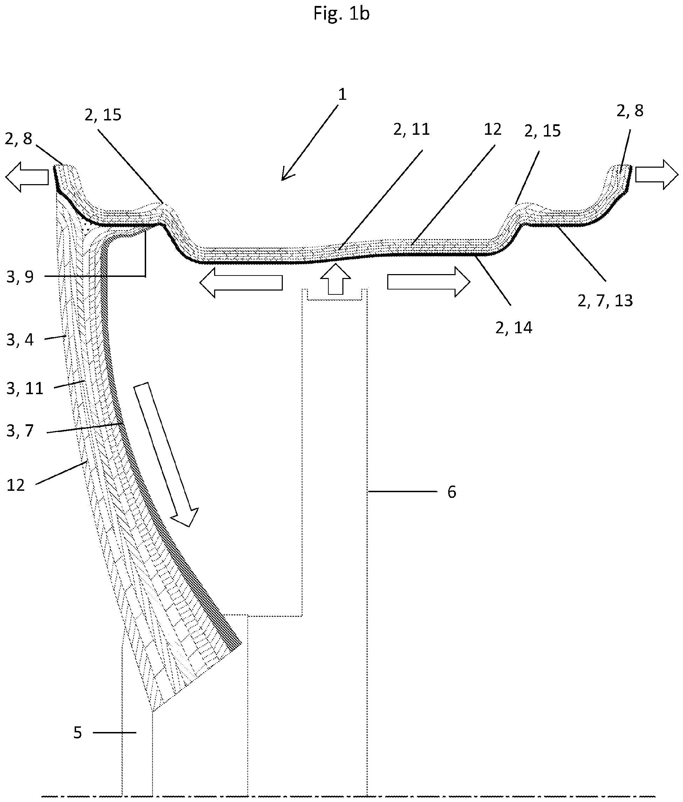

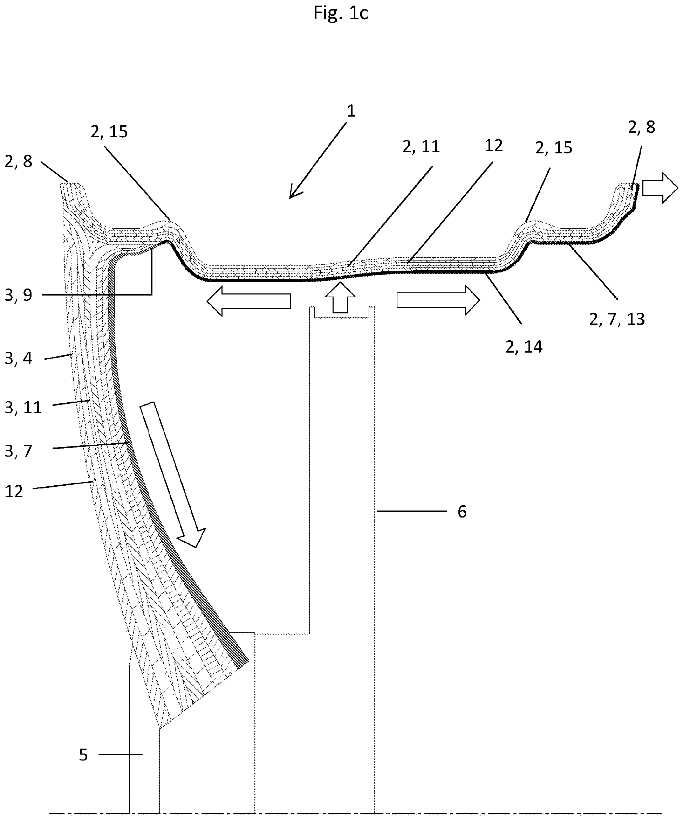

Fig. 1 zeigt ein erfindungsgemäßes Fahrzeugrad 1 mit einer Radfelge 2 und einer Radscheibe 3, die speziell als Radstern 3 mit Speichen 4 ausgebildet ist. Radfelge 2 und Radstern 3 bestehen jeweils aus kohlenfaserverstärktem Kunststoff. Über eine Radnabe 5 des Radsterns 3 kann das Fahrzeugrad 1 mit einer im Ausführungsbeispiel schematisch dargestellte Bremsanlage 6 verbunden werden, die eine Bremsscheibe 6 aufweist.

Die Radfelge 2 weist an einer der Bremsscheibe 6 zugewandten Felgeninnenseite und der Radstern 3 weist zumindest an einer der Bremsscheibe 6 zugewandten Radscheiben-Innenseite jeweils eine erfindungsgemäße Thermofunktionsstruktur 7 auf. Die Thermofunktionsstruktur 7 der Radfelge 2 erstreckt sich über die gesamte Felgen-Innenseite bis zu den beiden Felgenhörnern 8 der Radfelge 2.

Die Thermofunktionsstruktur 7 des Radsterns 3 erstreckt sich über die Radstern-Innenseite in radialer Richtung bis an einen Radkranz 9 des Radsterns 3 heran und kann zusätzlich bis an oder in die Speichen-Zwischenräume 10 des Radsterns 3 ragen oder diese ganz auskleiden.

Die Thermofunktionsstrukturen 7 der Radfelge 2 und des Radsterns 3 bedecken jeweils die felgeninnenseitige Oberfläche einer Tragstruktur 11 der Radfelge 2 bzw. die Oberfläche einer Tragstruktur 11 des Radsterns 3 radsterninnenseitig und in den Speichen-Zwischenräumen 10.

Der mit der Radfelge 2 verbundene Radstern 3 schließt mit seinem Radkranz 9 unmittelbar und flächig an die Thermofunktionsstruktur 7 der Radfelge 2 an.

Fig. 1a betrifft eine Schnittansicht des Fahrzeugrades 1 nach Fig. 1 entlang der Schnittebene A, aus der die Details des Fahrzeugrades 1 näher ersichtlich sind.

Die Tragstruktur 11 der Radfelge 2 und des Radsterns 3 weisen jeweils mehreren Lagen 12 des kohlenfaserverstärkten Kunststoffs auf.

Die Thermofunktionsstruktur 7 des Radsterns 3 besteht in diesem Ausführungsbeispiel aus einem dünnen, eloxierten Aluminiumblech, welches sowohl thermisch leitfähig als auch im Infrarot-Wellenbereich strahlungsabsorbierend und -emittierend ist.

Das eloxierte Aluminiumblech bedeckt die Oberfläche der Tragstruktur 11 des Radsterns 3 auf der Radstern-Innenseite flächig und ist vorzugsweise verschraubt oder geklebt.

Die Verwendung eines eloxierten Aluminiumbleches als Thermofunktionsstruktur 7 ermöglicht eine kostengünstige und bedarfsgerecht selektive und flexible Montage am Radstern 3.

Alternativ kann die Thermofunktionsstruktur 7 des Radsterns 3 aus einem Materialgewebe mit eloxierten Aluminiumbändern und Kohlenstofffasen bestehen (nicht dargestellt), wobei in dem Fall die Kohlenstofffasern zusätzlich zur Wärmeleitfähigkeit und zur Trageigenschaft der Tragstruktur 11 des Radsterns 3 beitragen.

Die Thermofunktionsstruktur 7 der Radfelge 2 besteht in diesem Ausführungsbeispiel aus einer Faserschicht, welche pechbasierte Kohlenstofffasern (Pechfasern) 13 enthält oder aus diesen besteht. Die Faserschicht kann als geflochtenes Fasergewebe ausgebildet sein.

Die Thermofunktionsstruktur 7 der Radfelge 2 ist aufgrund der pechbasierten Kohlenstofffasern 13 sowohl thermisch hoch-leitfähig als auch als realer schwarzer Strahler ausgebildet, der im Infrarot-Wellenbereich besonders gut strahlungsabsorbierend und -emittierend ist.

Die Faserschicht der Thermofunktionsstruktur 7 übernimmt somit zusätzlich zur Wärmeleitfunktion eine Tragefunktion zur Unterstützung der Tragstruktur 11 der Radfelge 2.

Zur Herstellung der Thermofunktionsstruktur 7 der Radfelge 2 und/oder des Radsterns 3 können einzelne Faserlagen, Fasergewebe/Fasergewirke oder vorgeformte, segmentierte Faserhalbzeuge auf die Tragstruktur 11 der Radfelge 2 bzw. auf die Tragstruktur 11 des Radsterns 3 appliziert werden.

Die Fig. 1a zeigt das Fahrzeugrad 1 nach Fig. 1 in einem Betriebszustand des Stillstands unmittelbar nach einem Brems- und Fahrbetrieb, nachfolgend als "Standphase" bezeichnet.

Die in der Standphase durch einen vorausgegangenen Brems- und Fahrbetrieb des Fahrzeugrades 1 erhitzte Bremsscheibe 6 erzeugt eine intensive Wärmestrahlung (vertikaler Pfeil in Fig. 1a), die vorrangig radial gerichtet auf das Felgenbett, insbesondere auf das Tiefbett 14, der Radfelge 2 (Hotspot der Radfelge 2) auftrifft. Die Thermofunktionsstruktur 7 der Radfelge 2 aus pechbasierten Kohlenstofffasern 13 absorbiert diese Wärmestrahlung als annähernd realer Strahler weitestgehend vollständig und leitet die Wärmeenergie vom Hotspot der Radfelge 2 entlang der Thermofunktionsstruktur 7 sowohl auf der sichtbaren Felgen-Innenseite als auch in dem durch die Verbindung zwischen Radfelge 2 und Radstern 3 verdeckten Abschnitt der Felgen-Innenseite in Richtung der beiden Felgenschultern 15 und der beiden Felgenhörner 8 der Radfelge 2 (horizontale Pfeile entlang der Radfelge 2 in Fig. 1a), die durch ihre Beabstandung zur Bremsscheibe 6 thermisch geringer belastet sind und wo die Wärmeenergie vorzugsweise als Wärmestrahlung an die gegenüber dem Hotspot der Radfelge 2 und gegenüber der Tragstruktur 11 der Radfelge 2 geringer temperierte atmosphärische Umgebung der Radfelge 2 emittiert wird (äußere horizontale Pfeile an den Felgenhörnern 8 in Fig. 1a).

Die thermische Belastung der Radfelge 2 wird durch optimale Verteilung über das gesamte Felgenbett lokal gemindert und schütz somit die unter der Thermofunktionsstruktur 7 angeordnete Faserverbund-Tragstruktur 11 der Radfelge 2.

Der Radstern 3 erfährt bei diesem Betriebszustand des Fahrzeugrades 1 (Standphase) aufgrund der eintretenden, thermischen Konvektion in vertikaler Richtung entlang der Kontur des Radsterns 3 eine geringere Wärmestrahlung und damit keine wesentlich hohe thermische Beanspruchung.

In dem in Fig. 1a nicht gezeigten Betriebszustand während des aktiven Brems- und Fahrbetriebs des Fahrzeugrades 1, nachfolgend als "Bremsphase" bezeichnet, wird die durch die erhitzte Bremsscheibe 6 entstehende Wärmestrahlung hauptsächlich axial in Richtung des Radsterns 3 und vorrangig in einem der Radnabe 5 nahen Bereich des Radsterns 3, welcher besonders nahe der Bremsscheibe 6 gelegen ist (Hotspot des Radsterns 3), an die Thermofunktionsstruktur 7 des Radsterns 3 aus eloxiertem Aluminiumblech übertragen. Nur geringe Anteile der Wärmestrahlung werden durch die Oberfläche des eloxierten Aluminiumbleches reflektiert. Der Hauptanteil der Wärmestrahlung in diesem Hotspot-Bereich des Radsterns 3 wird von der wärmeabsorbierenden Thermofunktionsstruktur 7 des Radsterns 4 absorbiert und als Wärmeenergie entlang der Thermofunktionsstruktur 7 in Richtung des Radkranzes 9 des Radsterns 3 und der Speichen-Zwischenräume 10 (hier nicht sichtbar) abgeleitet, welche zur Bremsscheibe 6 entfernter beabstandet sind und auch durch die im Fahrbetrieb beaufschlagte Luftströmung thermisch begünstigt sind. Dort wird die Wärmeenergie von der Thermofunktionsstruktur 7 des Radsterns 3, vorzugsweise als Wärmestrahlung, an die gegenüber dem Hotspot des Radsterns 3 und der Tragstruktur 11 des Radsterns 3 geringer temperierte atmosphärische Umgebung des Radsterns 3 emittiert.

Die Radfelge 2, insbesondere das Felgenbett mit den Felgenschultern 15 und Felgenhörnern 8, wird bei diesem Betriebszustand infolge der fahrtbedingt auftretenden Luftströmungen nur gering thermisch belastet.

Fig. 1b zeigt eine Schnittansicht eines Fahrzeugrades 1 ähnlich nach Fig. 1 entlang der Schnittebene A, welches geringfügige Abweichungen gegenüber der Ausführung nach Fig. 1, 1 a aufweist.

Um Wiederholungen zu vermeiden werden nachfolgend nur die Unterschiede der Merkmale und Wirkungsweisen gegenüber der Ausführung des Fahrzeugrades 1 nach Fig. 1, 1a beschrieben.

Die Thermofunktionsstruktur 6 des Radsterns 3 nach diesem Ausführungsbeispiel besteht im Unterschied zur Ausführung nach Fig. 1a aus einer dünnen, schwarz beschichteten Aluminiumfolie, welche ebenfalls sowohl thermisch leitfähig als auch im Infrarot-Wellenbereich strahlungsabsorbierend und -emittierend ist.

Die beschichtete Aluminiumfolie kann auf die Oberfläche der Tragstruktur 11 des Radsterns 3 bedampft, aufgeschrumpft, geklebt oder im Aushärtungsprozess des Faserverbundmaterials der Tragstruktur 11 des Radsterns 3 verbunden werden. Durch die Verwendung der beschichteten Aluminiumfolie als Thermofunktionsstruktur 11 kann die Masse, welche nicht zur Tragfähigkeit des Radsterns 3 beiträgt, vorteilhaft reduziert werden.

Die Thermofunktionsstruktur 7 des Radsterns 3 erstreckt sich im Ausführungsbeispiel nach Fig. 1b im Unterschied zur Ausführung nach Fig. 1a vollständig über die Radstern-Innenseite bis einschließlich dem Radkranz 9, so dass die Thermofunktionsstrukturen 7 des Radsterns 3 und der Radfelge 2 im Übergangsbereich des Radsterns 3 zur Radfelge 2 miteinander verbunden sind.

In Fig. 1b wird ebenfalls der Betriebszustand des Fahrzeugrades 1 in der Standphase gezeigt. Die Vorgänge und Wirkungen entsprechen grundsätzlich den Beschreibungen in Fig. 1a, jedoch können durch die zusätzliche Verbindung der Thermofunktionsstrukturen 7 von Radfelge 2 und Radstern 3 in der Ausführung nach Fig. 1b die nutzbaren Wärmeleitwege und Abstrahlflächen erweitert werden.

Die hauptsächlich von der Thermofunktionsstruktur 7 der Radfelge 2 absorbierte Wärmestrahlung wird als Wärmeenergie einerseits entlang der Thermofunktionsstruktur 7 der Radfelge 2 sowohl über die sichtbare Felgen-Innenseite als auch im verdeckten Abschnitt der Felgen-Innenseite bis zu den beiden Felgenhörner 8 geleitet (horizontale Pfeile entlang der Radfelge 2 und an den Felgenhörnern 8 in Fig. 1b) und andererseits auch entlang der Thermofunktionsstruktur 7 des Radsterns 3 über die Radstern-Innenseite geleitet und verteilt (vertikaler Pfeil entlang des Radsterns in Fig. 1b), wo die Wärmeenergie jeweils in die geringer temperierte Umgebung abgeführt wird.

In dem in Fig. 1b nicht gezeigten Betriebszustand des Fahrzeugrads 1 in der Bremsphase, wird im Unterschied zur Beschreibung nach Fig. 1a die durch die erhitzte Bremsscheibe 6 entstandene Wärmestrahlung hauptsächlich an die Thermofunktionsstruktur 7 des Radsterns 3 aus schwarz beschichteter Aluminiumfolie übertragen, welche die Wärmestrahlung als annähernd realer schwarzer Strahler weitestgehend vollständig absorbieren kann.

Die absorbierte Wärmestrahlung wird als Wärmeenergie entlang der Thermofunktionsstruktur 7 in Richtung des Radkranzes 9 und der hier nicht ersichtlichen Speichen-Zwischenräume 10 abgeleitet und weiter über die verbundene Thermofunktionsstruktur 7 der Radfelge 2 sowohl über die sichtbare Felgeninnenseite des Felgenbetts als auch über den verdeckten Abschnitt der Felgen-Innenseite in Richtung der beiden Felgenschultern 15 und der beiden Felgenhörner 8 der Radfelge 2 verteilt, wo die Wärmeenergie jeweils in die geringer temperierte Umgebung abgeführt wird.

Die Ausführungsform erweitert die Wärmeübertragungswege zugunsten eines noch großflächigeren und effektiveren Wärmeabtransportes wechselseitig von der Felgen-Innenseite des Felgenbetts zur Radstern-Innenseite und umgekehrt an die betriebsbedingt jeweils geringer temperierte Umgebung des Fahrzeugrades, was die thermische Belastung des Fahrzeugrades weiter mindert.

Fig. 1c zeigt eine Schnittansicht eines Fahrzeugrades 1 ähnlich nach Fig. 1 entlang der Schnittebene A, welches geringfügige Abweichungen gegenüber der Ausführung nach Fig. 1b aufweist, wobei ebenfalls der Betriebszustand des Fahrzeugrades 1 in der Standphase gezeigt wird.

Um Wiederholungen zu vermeiden werden nachfolgend nur die Unterschiede der Merkmale und Wirkungsweisen gegenüber der Ausführung des Fahrzeugrades 1 nach Fig. 1b beschrieben.

Die Thermofunktionsstruktur 7 der Radfelge 2 erstreckt sich im Ausführungsbeispiel nach Fig. 1c im Unterschied zur Ausführung nach Fig. 1b nur über die sichtbare Felgeninnenseite bis zum Übergangsbereich von der Radfelge 2 zum Radstern 3, wo sie mit der vollständig über die Radstern-Innenseite erstreckten Thermofunktionsstruktur 7 des Radsterns 3 verbunden ist, so dass die Thermofunktionsstrukturen 7 einander übergehen.

Damit wird der Verbindungsbereich zwischen der Radfelge 2 und dem Radstern 3 vom Wärmeleitungsweg der Thermofunktionsstruktur 7 der Radfelge 2 ausgenommen, so dass dieser Verbindungsbereich eine geringere thermische Belastung erfahren kann und somit die Betriebszuverlässigkeit thermisch relevanter Verbindungskonstruktionen des Fahrzeugrades verbessert werden kann.

Zusätzlich ergeben sich fertigungstechnologische Vorteile, wie zum Beispiel die Möglichkeit einer nachträglichen Applikation der Thermofunktionsstrukturen 7 auf der Innenseite eines bestehenden Rades bzw. eines ganzheitlich bzw. monolithisch gefertigten Rades. Zudem ist die Applikation der Thermofunktionsstrukturen 7 unabhängig vom Herstellungsprozess des Fahrzeugrades 1 möglich.

Es können auch hier zur Herstellung der Thermofunktionsstruktur einzelne Faserlagen, Fasergewebe/Fasergewirke oder vorgeformte, segmentierte Faserhalbzeuge auf die Tragstruktur 11 der Radfelge 2 und des Radsterns 3 appliziert werden.

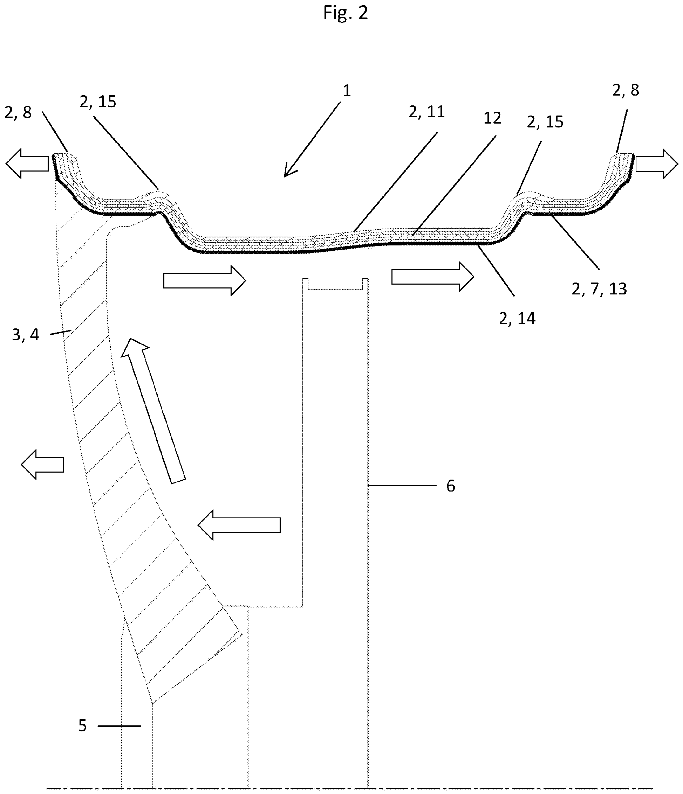

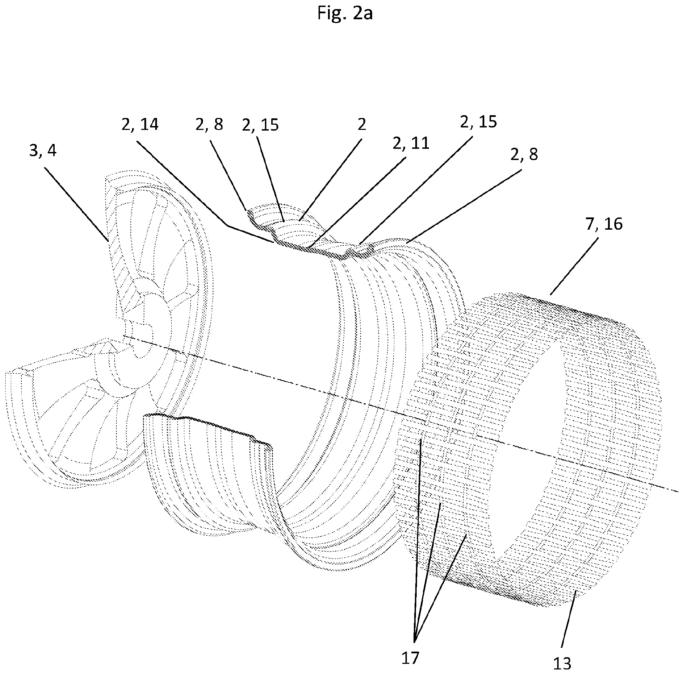

Fig. 2 zeigt eine Schnittansicht eines Fahrzeugrades 1 ähnlich dem Fahrzeugrad 1 nach Fig. 1, 1a, 1b.

Zur Vermeidung von Wiederholungen werden nachfolgend nur die Unterschiede der Merkmale und Wirkungsweisen gegenüber der Ausführung des Fahrzeugrades 1 nach Fig. 1, 1a, 1b beschrieben.

Das Fahrzeugrad 1 nach Fig. 2 ist ein sogenanntes Hybrid-Fahrzeugrad. Es weist alternativ zur Ausführung nach Fig. 1, 1a, 1b einen Radstern 3 aus Aluminium oder aus Magnesium (ggf. zusätzlich schwarz beschichtet) auf, welcher damit wärmeleitfähig bis hoch-wärmeleitfähig ist und im Infrarot-Wellenbereich strahlungsabsorbierend und -emittierend ist.

Somit wirkt der Radstern 3 selbst als wärmeleitende Komponente (3) des Fahrzeugrades ebenso wie die im Falle eines Radsterns aus Faserverbundmaterial für den thermischen Schutz des Faserverbundmaterials vorgesehene Thermofunktionsstruktur.

Die Thermofunktionsstruktur 7 der Radfelge 2 besteht entsprechend Fig. 1 aus einer Faserschicht mit zumindest teilweise pechbasierten Kohlenstofffasern (Pechfasern) 13 , welche als ein geflochtenes Fasergewebe 16 ausgebildet ist und gemäß Fig. 1, 1a, 1b über die gesamte Felgen-Innenseite der Radfelge 2 erstreckt ist.

Der metallische Radstern 3 schließt mit seinem Radkranz somit unmittelbar und flächig an die Thermofunktionsstruktur 7 der Radfelge 2 an.

Durch diese unmittelbare Anbindung der Thermofunktionsstruktur 7 der Radfelge 2 mit dem metallischen Radstern 3 können die nutzbaren Wärmeleitwege und die Abstrahlflächen, analog der Ausführung nach Fig. 1b erweitert werden.

In Fig. 2 wird der Betriebszustand des Fahrzeugrades 1 in der Bremsphase gezeigt, wobei die Vorgänge und Wirkungen grundsätzlich der beschriebenen Bremsphase in Fig. 1a, 1b entsprechen.

So wird hierbei die axial in Richtung des Radsterns 3 emittierte Wärmestrahlung (horizontaler Pfeil nahe der Radnabe 5 in Fig. 2) unmittelbar vom metallischen Radstern 3 absorbiert, wobei (ohne Schwarz-Beschichtung) nur ein geringer Teil der Wärmestrahlung reflektiert wird und mit Schwarz-Beschichtung nahezu die gesamte Wärmestrahlung absorbiert wird.

Die absorbierte Wärmeenergie kann durch Wärmeleitung über den gesamten Korpus des Radsterns 3 verteilt (Pfeil entlang des Radsterns 3 in Fig. 2) werden und großflächig über die gesamte Oberfläche des Radsterns 3, insbesondere auch über die Speichen-Zwischenräume und über die Radstern-Außenseite (horizontaler Pfeil auf Radstern-Außenseite) abgestrahlt werden; sie kann zusätzlich über die Verbindung zur Thermofunktionsstruktur 7 der Radfelge 2 in Richtung des Felgenbetts und weiter über die sichtbare Felgen-Innenseite und über den verdeckten Abschnitt der Felgen-Innenseite in Richtung der Felgenhörner 8 abgeleitet und an die Umgebung abgegeben werden (horizontale Pfeile entlang der Radfelge 2 und an den Felgenhörnern in Fig. 2) .

Umgekehrt kann im hier nicht dargestellten Betriebszustand der Standphase des Fahrzeugrades 1 die hauptsächlich über die Thermofunktionsstruktur 7 der Radfelge 2 im Hotspot-Bereich des Felgenbetts absorbierte Wärmestrahlung nicht nur in Richtung der Felgenschultern 15 und Felgenhörner 8 abgeleitet und abgestrahlt werden, sondern auch über den angeschlossene metallischen Radstern 3 übertragen und verteilt werden und dort in die Umgebung abgeführt bzw. abgestrahlt werden.

Fig. 2a zeigt eine Explosions-Schnittdarstellung einer Radfelge 2 des Fahrzeugrades 1 nach Fig. 2 vor der Anbringung der Thermofunktionsstruktur 7 auf die Tragstruktur 11 der Radfelge 2 auf der Felgen-Innenseite und vor der Montage des metallischen Radsterns 3 an die Radfelge 2.

Das Fasergewebe 16 der die Pechfasern 13 enthaltende Faserschicht der Thermofunktionsstruktur 7 ist hier in Form eines Textilschlauches ausgebildet. Die in Achsrichtung der Radfelge 2 bzw. des Fahrzeugrades 1 orientierten Pechfasern 13 werden durch in Umfangsrichtung verlaufende Fasern oder Fäden 17 des Textilschlauches gestützt und in ihrer Ausrichtung und Positionierung weitestgehend fixiert. Damit wird bei der Anbringung der Thermofunktionsstruktur 7 an die Felgeninnenseite der Radfelge 2 eine gleichmäßige, parallel verlaufende Positionierung der einzelnen Pechfasern 13 in Achsrichtung gewährleistet, was die Wärmeenergieverteilung und die Wärmeableitung entlang der Thermofunktionsstruktur 7 insbesondere vom Hotspot der Radfelge 2 (Tiefbett 14) in Richtung der beiden Felgenschultern 15 und der Felgenhörner 8 der Radfelge 2 verbessert.

Die in Umfangsrichtung verlaufenden Stützfasern oder Stützfäden 17 des Textilschlauches sind elastisch (z.B. aus einem Elastomer) ausgebildet, was die gleichmäßige und parallelisierte Ausrichtung und Positionierung der Pechfasern 13 erleichtert.

Besonders vorteilhaft erweisen sich die umlaufenden, elastischen Stützfäden 17 für die Ausbildung einer konturgetreuen Thermofunktionsstruktur 7 in Bereichen der radialen Umfangsänderung der Bauteilgeometrie der Radfelge 2.

So kann bei der Herstellung der Radfelge 2 mit der Thermofunktionsstruktur 7 zunächst der elastische Textilschlauch auf ein die Kontur der Felgen-Innenseite der Radfelge 2 abbildendes Formwerkzeug aufgezogen werden und mittels entsprechende Querschnitts-Ausdehnungen bzw. Querschnittsverjüngungen des elastischen Textilschlauches unter Beibehaltung der gewünschten Faserlage und -richtung der Pechfasern 13 genau an die Kontur des Formwerkzeuges angeformt werden, um die Thermofunktionsstruktur 7 der Felgen-Innenseite der Radfelge 2 konturgetreu auszubilden.

Nachfolgend können zur Fertigstellung der Radfelge 2 in einem Flecht- oder Wickelvorgang die Faserlagen der Tragstruktur 11 der Radfelge 2 konturgenau auf das Fasergewebe 16 der Thermofunktionsstruktur 7 aufgebracht werden und anschließend alle Faserlagen gemeinsam konsolidiert werden.

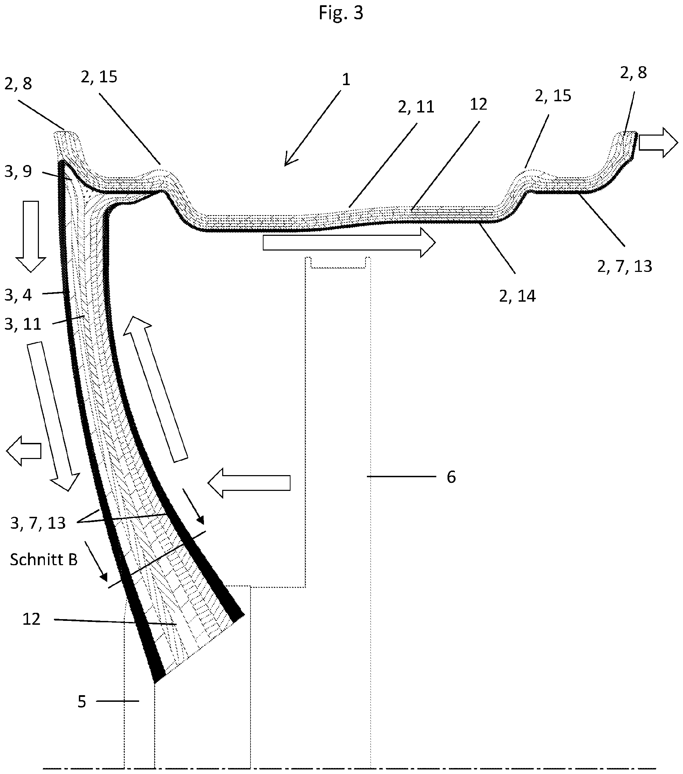

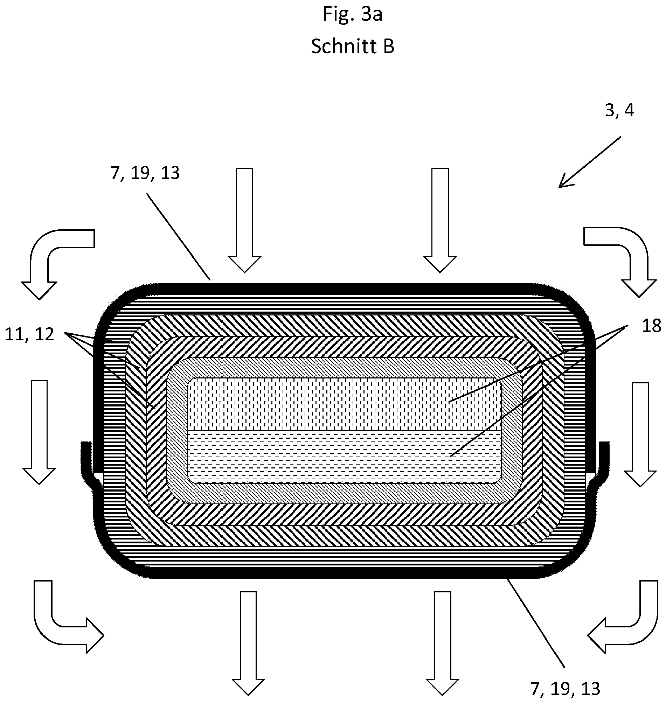

Fig. 3 zeigt eine Schnittansicht eines Fahrzeugrades 1 ähnlich dem Fahrzeugrad 1 nach Fig. 1.

Zur Vermeidung von Wiederholungen werden nachfolgend nur die Unterschiede der Merkmale und Wirkungsweisen gegenüber der Ausführung des Fahrzeugrades 1 nach Fig. 1, 1a beschrieben.

Der Radstern 3 aus kohlenfaserverstärktem Kunststoff weist im Unterschied zur Ausführung nach der Fig. 1, 1a eine Thermofunktionsstruktur 7 aus einer Faserschicht mit oder aus pechbasierten Kohlenstofffasern 13 auf, welche sich über die gesamten Oberfläche des Radsternes 3 erstreckt und diese vollständig bedeckt.

Diese Thermofunktionsstruktur 7 ist aufgrund der pechbasierten Kohlenstofffasern sowohl thermisch hoch-leitfähig als auch ein realer schwarzer Strahler, der im Infrarot-Wellenbereich besonders gut strahlungsabsorbierend und -emittierend ist.

Damit verfügen der Radstern 3 ebenso wie die Radfelge 2 jeweils über eine Thermofunktionsstruktur 7 mit im Wesentlichen identischen Eigenschaften und Qualität.

Es wird in Fig. 3 der Betriebszustand des Fahrzeugrades 1 in der Bremsphase gezeigt.

Die axial in Richtung des Fahrzeugrades 1 von der Bremsscheibe 6 emittierte Wärmestrahlung (horizontaler Pfeil in Fig. 3 im Radnaben-nahen Bereich des Radsterns 3) wird hauptsächlich an die Thermofunktionsstruktur 7 im Hotspot-Bereich des Radsterns 3 übertragen, welche die Wärmestrahlung als annähernd realer Strahler weitestgehend vollständig absorbiert.

Die absorbierte Wärme wird als Wärmeenergie entlang der Thermofunktionsstruktur 7 des Radsterns 3 um den gesamten Umfang des Radsterns 3 verteilt (Pfeile entlang der inneren und äußeren Seite des Radsterns 3 in Fig. 3) und kann demnach großflächig an der thermisch geringer belasteten Oberfläche der inneren und äußeren Seite des Radsterns 3 außerhalb des Hotspot-Bereich des Radsterns 3 abgestrahlt werden.

Die Wärmeenergie kann zusätzlich über die Verbindung zur Thermofunktionsstruktur 7 der Radfelge 2 in Richtung des Felgenbetts und der Felgenhörner 8 abgeleitet werden (horizontaler Pfeil entlang des Felgenbetts der Radfelge 2 in Fig. 3).

Im nicht dargestellten Betriebszustand der Standphase des Fahrzeugrades 1 kann die hauptsächlich über die Thermofunktionsstruktur 7 der Radfelge 2 im Hotspot-Bereich der Radfelge 2 (Tiefbett 14) absorbierte Wärmestrahlung nicht nur in Richtung der Felgenschultern 15 und Felgenhörner 8 abgeleitet und abgestrahlt werden, sondern auch auf die verbundene Thermofunktionsstruktur 7 des Radsterns 3 übertragen und um den gesamten Umfang des Radsterns 3 verteilt werden, wo sie großflächig an der thermisch geringer belasteten Oberfläche der inneren und äußeren Seite des Radsterns 3 abgestrahlt werden kann.

Diese Ausführung bietet eine maximal mögliche Absorption der in den jeweiligen Betriebszuständen erzeugten Wärmestrahlung, des Weiteren eine besonders hohen Grad der Wärmeleitung und maximal mögliche Wärmeverteilungs- und Abstrahlflächen bei einem besonders hohem Wärmeemissionsgrad.

Hierdurch ist ein besonders effizienter Kühlungseffekt zum Schutz der darunter befindlichen, abgedeckten Tragstruktur 11 von Radfelge 2 und Radscheibe 3 erzielbar, zumal durch die günstigen mechanischen Eigenschaften der Pechfasern 13 in den Thermofunktionsstrukturen 7 diese zur Tragfähigkeit der Tragstruktur 11 von Radfelge 2 und Radscheibe 3 beitragen können und mithin die notwendige Masse zur Funktion des Fahrzeugrades 1 optimiert werden kann.

Fig. 3a zeigt einen vergrößert dargestellten Schnitt durch eine Speiche 4 des Radsterns 3 nach Fig. 3 entlang der Schnittlinie B. Aus dieser Darstellung ist die Tragstruktur 11 der Speiche 4 aus kohlenfaserverstärktem Kunststoff im Detail ersichtlich, welche einen Formkern 18 und mehrere um den Formkern 18 umlaufende, auf Stoß verbundene Lagen 12 des kohlenfaserverstärkten Kunststoffs aufweist, die die Faserschichten 12 der Tragstruktur 11 bilden.

Am äußeren Umfang der Tragstruktur 11 ist anliegend die Thermofunktionsstruktur 7 angeordnet, die im Bereich der Speiche 4 aus zwei halbschalenartig ausgebildeten Teillagen 19 eines entsprechend vorgeformten Fasergeleges 19 mit oder aus pechbasierten Fasern 13 gebildet ist, die jeweils beidseitig der Speiche 4 die Tragstruktur 11 der Speiche 4 umfassen.

Die halbschalenartigen Teillagen 19 der Thermofunktionsstruktur 7 sind im Bereich des Speichen-Zwischenraumes 10 überlappend angeordnet, wodurch der Wärmetransport entlang der Thermofunktionsstruktur 7 gegenüber einem lediglich stumpfen Anschluss von vorgeformten Teillagen auf Stoß verbessert wird und damit auch die Wärmeleitung und -verteilung um den Umfang der Speiche 4 (in Richtung der Pfeile) effizienter wird.

Alternativ kann die Thermofunktionsstruktur 7 im Bereich der Speichen 4 auch mittels eines elastischen Textilschlauches eines mit pechbasierten Fasern 13 geflochtenen Fasergewebes ausgebildet werden, wobei hierfür der elastischen Textilschlauches auf die vorgefertigte Tragstruktur 11 der Speiche 4 aufgezogen und umschließend angeformt wird (nicht dargestellt).

Damit kann der technologische Aufwand für das Herstellen und Anformen der Thermofunktionsstruktur 7 minimiert und insbesondere die Stoß- bzw. Überlappungsnähte, wie sie durch vorgeformte Teillagen 19 entstehen, vermieden werden, was die Wärmeleitung und -verteilung um den Umfang der Speiche 4 noch weiter verbessert.

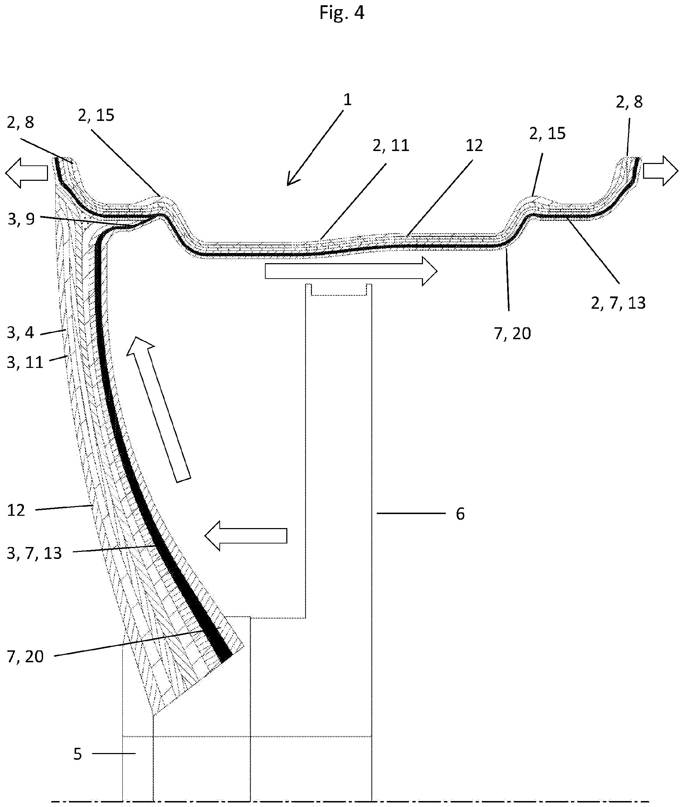

Fig. 4 zeigt eine Schnittansicht eines Fahrzeugrades 1 mit Merkmalen ähnlich dem Fahrzeugrad 1 nach Fig. 1, 1b und im Betriebszustand der Bremsphase entsprechend dem Betriebszustand nach Fig. 2.

Zur Vermeidung von Wiederholungen werden nachfolgend nur die Unterschiede der Merkmale und Wirkungsweisen gegenüber der Ausführung des Fahrzeugrades 1 nach Fig. 1, 1b und dem Betriebszustand nach Fig. 2 beschrieben.

Radfelge 2 und Radstern 3 bestehen bei diesem Ausführungsbeispiel jeweils aus glasfaserverstärktem Kunststoff. Die Tragstrukturen 11 der Radfelge 2 und des Radsterns 3 weisen jeweils mehreren Lagen 12 des glasfaserverstärkten Kunststoffs auf. Dieser Faserverbundwerkstoff ist gegenüber dem Faserverbundwerkstoff der Tragstrukturen 11 des Fahrzeugrades 1 nach Fig. 1, 1b zwar etwas weicher, jedoch schadenstoleranter gegenüber thermischen Einflüssen.

Der Radstern 3 und die Radfelge 2 weisen jeweils eine Thermofunktionsstruktur 7 aus einer Faserschicht mit oder aus pechbasierten Kohlenstofffasern 13 auf.

Damit sind die Thermofunktionsstrukturen 7 sowohl thermisch hoch-leitfähig als auch - als realer schwarzer Strahler - im Infrarot-Wellenbereich besonders gut strahlungsabsorbierend und -emittierend.

Die hoch-leitfähige und Infrarot-strahlungsabsorbierende und - emittierende Thermofunktionsstruktur 7 der Radfelge 2 erstreckt sich über die gesamte Felgeninnenseite bis zu den Felgenhörnern 8. Die Thermofunktionsstruktur 7 des Radsterns 3 erstreckt sich über die Radstern-Innenseite bis einschließlich dem Radkranz 9 und kann zusätzlich bis an oder in die Speichen-Zwischenräume 10 ragen oder diese auskleiden.

Die hoch-leitfähige und Infrarot-strahlungsabsorbierende und -emittierende Thermofunktionsstrukturen 7 des Radsterns 3 und die Thermofunktionsstruktur 7 der Radfelge 2 sind entsprechend dem Ausführungsbeispiel nach Fig. 1b im Übergangsbereich des Radsterns 3 zur Radfelge 2 miteinander verbunden.

Die Thermofunktionsstrukturen 7 der Radscheibe 3 und der Radfelge 2 weisen jeweils eine Infrarot-strahlungsdurchlässige Deckschicht 20 auf. Diese Deckschicht 20 ist vorzugsweise eine transparente oder eine leicht eingefärbte PE-Folie oder ein Infrarot-strahlungsdurchlässiger Lack, z. B. auf Acrylbasis.

Diese Deckschicht 20 dient vorrangig dem mechanischen Schutz der Pechfasern 13 des abgedeckten Bereiches der Thermofunktionsstruktur 7 oder auch der ästhetischen Gestaltung der sichtbaren Oberfläche der Thermofunktionsstruktur 7, ohne den Durchgang der Wärmestrahlung maßgeblich zu behindern und die Absorptions- bzw. Emissionsleistung der abgedeckten Thermofunktionsstruktur 7 zu schwächen.

Da die Infrarot-strahlungsdurchlässige Deckschicht 20 kaum einen wärmetechnischen Einfluss auf die Funktion der Thermofunktionsstruktur 7 nimmt, entsprechen die wärmetechnischen Vorgänge und Wirkungsweisen des gezeigten Betriebszustandes des Fahrzeugrades 1 in der Bremsphase prinzipiell der diesbezüglichen vorstehenden Beschreibungen zum Betriebszustand "Bremsphase" in den vorstehenden Ausführungsbeispielen gemäß dem Fahrzeugrad nach Fig. 1b, 2 und 3.

Zu gestalterischen Zwecken ist es denkbar, die Deckschicht 20 teilweise bzw. abschnittsweise auch blickdicht eingefärbt zu gestalten, ohne die erforderliche Durchgangsleistung zur Übertragung der Wärmestrahlung nachteilig zu beschränken.

So kann die Deckschicht 20 beispielsweise im Bereich des direkten Strahlungseintrages auf die Thermofunktionsstruktur 7 der Radfelge bzw. des Radsterns, wie z.B. im Bereich des Felgenbetts/Tiefbetts und des radnaben-naher Bereichs der Radstern-Innenseite (Wärmeeinleitungsbereiche) und/oder in besonders strahlungswirksamen Wärmeausleitungsbereichen (Felgenhorn, Speichen-Außenseite) in vorbeschriebener Weise Infrarot-strahlungsdurchlässig, transparent ausgebildet sein und in Bereichen vorrangiger Wärmeleitungsfunktion der Thermofunktionsstruktur 7 der Radfelge bzw. des Radsterns (wie z.B. an den Speichen-Zwischenräumen, am Radkranz, am Übergang vom Tiefbett zur Felgenschulter) blickdicht eingefärbt ausgebildet sein (nicht dargestellt).

Die Infrarot-strahlungsdurchlässig, transparent ausgebildete Deckschicht 20 kann im Weiteren in beliebigen Mustern mit einer blickdicht eingefärbt ausgebildeten Deckschicht variiert werden.

Die Übergänge zwischen der Infrarot-strahlungs-durchlässig, transparent ausgebildeten Deckschicht 20 und einer blickdicht eingefärbt ausgebildeten Deckschicht können zudem fliesend gestaltet sein.

### Bezugszeichenliste

- 1: Fahrzeugrad
- 2: Radfelge
- 3: Radscheibe, Radstern
- 4: Speiche des Radsterns
- 5: Radnabe
- 6: Bremsanlage mit Bremsscheibe
- 7: Thermofunktionsstruktur
- 8: Felgenhorn
- 9: Radkranz der Radscheibe, des Radsterns
- 10: Speichen-Zwischenraum
- 11: Tragstruktur
- 12: Lage, Faserschicht der Tragstruktur
- 13: pechbasierte Kohlenstofffasern, Pechfasern
- 14: Tiefbett der Radfelge
- 15: Felgenschulter
- 16: Fasergewebe, Textilschlauch
- 17: Faden, Fasern, in Umfangsrichtung verlaufend
- 18: Formkern
- 19: Fasergelege, Teillagen
- 20: Infrarot-strahlungsdurchlässige Deckschicht

## Patentansprüche

1. Fahrzeugrad, welches mit einer Bremsanlage verbindbar ist, wobei dessen Radfelge und / oder Radscheibe eine Tragstruktur aus faserverstärktem Kunststoff aufweist, wobei die Radfelge (2) und / oder die Radscheibe (3) zumindest auf einer der Bremsanlage (6) zugewandten Seite der Tragstruktur (11) eine Thermofunktionsstruktur (7) aufweist, welche thermisch leitfähiger als die Tragstruktur (11) ausgebildet ist und derart erstreckt angeordnet ist, dass eine durch die Bremsanlage (6) erzeugte Wärmeenergie im Wesentlichen aus einem hierdurch thermisch hochbelasteten Bereich der Radfelge (2) und / oder der Radscheibe (3) in mindestens einen thermisch geringer belasteten Bereich der Radfelge (2) und / oder der Radscheibe (3) abgeführt wird, **dadurch gekennzeichnet, dass** die Thermofunktionsstruktur (7) hoch-wärmeleitend ausgebildet ist und eine Wärmeleitfähigkeit mit einem Wärmeleitkoeffizienten im Bereich von etwa 100 bis 1100 W/mK aufweist.

2. Fahrzeugrad nach Anspruch 1, **dadurch gekennzeichnet, dass** die Thermofunktionsstruktur (7) im Infrarot-Wellenbereich mit einer charakteristischen Wellenlänge von ca. 780 nm bis 100 µm strahlungsabsorbierend und -emittierend ausgebildet ist.

3. Fahrzeugrad nach einem der Ansprüche 1 bis 2, **dadurch gekennzeichnet, dass** die Thermofunktionsstruktur (7) Kohlenstofffasern enthält.

4. Fahrzeugrad nach einem der Ansprüche 2 bis 3, **dadurch gekennzeichnet, dass** die Thermofunktionsstruktur (7) als ein realer Schwarzer Körper ausgebildet ist.

5. Fahrzeugrad nach einem der Ansprüche 1 bis 4, **dadurch gekennzeichnet, dass** die Thermofunktionsstruktur (7) Pechbasierte Kohlenstofffasern (13) enthält.

6. Fahrzeugrad nach einem der Ansprüche 1 bis 5, **dadurch gekennzeichnet, dass** die Thermofunktionsstruktur (7) aus einem Fasergewebe (16), Fasergewirk oder einem Fasergelege (19)gebildet ist.

7. Fahrzeugrad nach Anspruch 6, **dadurch gekennzeichnet, dass** das Fasergewebe (16) oder das Fasergelege (19) elastisch ausgebildet ist.

8. Fahrzeugrad nach einem der Ansprüche 1 bis 7, **dadurch gekennzeichnet, dass** die Thermofunktionsstruktur (7) der Radfelge (2) und die Thermofunktionsstruktur (7) der Radscheibe (7) miteinander verbunden sind.

9. Fahrzeugrad nach einem der Ansprüche 1 bis 8, **dadurch gekennzeichnet, dass** sich die Thermofunktionsstruktur (7) der Radscheibe (3) und / oder der Radfelge (2) bis in eine oder bis zu einer der Bremsanlage (6) abgewandten Seite der Radscheibe (3) und / oder der Radfelge (2) erstreckt.

10. Fahrzeugrad nach einem der Ansprüche 1 bis 9, **dadurch gekennzeichnet, dass** die Thermofunktionsstruktur (7) der Radscheibe (3) und / oder der Radfelge (2) mit einer wärmeleitenden Komponente (3) des Fahrzeugrades (1) verbunden ist.

11. Fahrzeugrad nach einem der Ansprüche 1 bis 10, **dadurch gekennzeichnet, dass** die Thermofunktionsstruktur (7) der Radfelge (2) und / oder die Thermofunktionsstruktur (7) der Radscheibe (3) zumindest bereichsweise eine Deckschicht (20) aufweist.

12. Fahrzeugrad nach Anspruch 11, **dadurch gekennzeichnet, dass** die Deckschicht (20) Infrarot-strahlungsdurchlässig ausgebildet ist.

## Claims

1. Vehicle wheel, which can be connected to a brake system, wherein the wheel rim and/or wheel disc thereof has a supporting structure made of fibre-reinforced plastic, wherein the wheel rim (2) and/or the wheel disc (3) has at least on a side of the supporting structure (11) that is facing the brake system (6) a thermal functional structure (7), which is formed as thermally more conductive than the supporting structure (11) and is arranged so as to extend in such a manner that thermal energy generated by the brake system (6) is substantially removed from a region of the wheel rim (2) and/or of the wheel disc (3) that is thereby subjected to great thermal loading into at least one region of the wheel rim (2) and/or of the wheel disc (3) that is subjected to less thermal loading, **characterized in that** the thermal functional structure (7) is formed as highly thermally conductive and has a thermal conductivity with a coefficient of thermal conduction in the range of approximately 100 to 1100 W/mK.

2. Vehicle wheel according to Claim 1, **characterized in that** the thermal functional structure (7) is formed as radiation-absorbing and emitting in the infrared wave range with a characteristic wavelength of about 780 nm to 100 µm.

3. Vehicle wheel according to either of Claims 1 and 2, **characterized in that** the thermal functional structure (7) contains carbon fibres.

4. Vehicle wheel according to either of Claims 2 and 3, **characterized in that** the thermal functional structure (7) is formed as a real black body.

5. Vehicle wheel according to one of Claims 1 to 4, **characterized in that** the thermal functional structure (7) contains pitch-based carbon fibres (13) .

6. Vehicle wheel according to one of Claims 1 to 5, **characterized in that** the thermal functional structure (7) is formed from a woven fibre fabric (16), a knitted fibre fabric or a laid fibre scrim (19) .

7. Vehicle wheel according to Claim 6, **characterized in that** the woven fibre fabric (16) or the laid fibre scrim (19) is elastically formed.

8. Vehicle wheel according to one of Claims 1 to 7, **characterized in that** the thermal functional structure (7) of the wheel rim (2) and the thermal functional structure (7) of the wheel disc (7) are connected to one another.

9. Vehicle wheel according to one of Claims 1 to 8, **characterized in that** the thermal functional structure (7) of the wheel disc (3) and/or of the wheel rim (2) extends into or up to a side of the wheel disc (3) and/or of the wheel rim (2) that is facing away from the brake system (6).

10. Vehicle wheel according to one of Claims 1 to 9, **characterized in that** the thermal functional structure (7) of the wheel disc (3) and/or the wheel rim (2) is connected to a thermally conducting component (3) of the vehicle wheel (1).

11. Vehicle wheel according to one of Claims 1 to 10, **characterized in that** the thermal functional structure (7) of the wheel rim (2) and/or the thermal functional structure (7) of the wheel disc (3) have at least in some regions a cover layer (20).

12. Vehicle wheel according to Claim 11, **characterized in that** the cover layer (20) is formed as permeable to infrared radiation.

## Revendications

1. Roue de véhicule qui peut être reliée à un système de freinage, la jante de ladite roue et/ou le disque de ladite roue comportant une structure de support en matière synthétique renforcée de fibres, la jante de roue (2) et/ou le disque de roue (3) comportant une structure à fonction thermique (7) au moins sur un côté de la structure de support (11) qui est dirigé vers le système de freinage (6), laquelle structure à fonction thermique est thermiquement plus conductrice que la structure de support (11) et s'étend de manière à ce qu'une énergie thermique générée par le système de freinage (6) est dissipée sensiblement depuis une zone fortement sollicitée thermiquement de la jante de roue (2) et/ou du disque de roue (3) jusque dans au moins une zone thermiquement moins sollicitée de la jante de roue (2) et/ou du disque de roue (3), **caractérisée en ce que** la structure à fonction thermique (7) est conçue pour être thermiquement très conductrice et présente une conductivité thermique dont le coefficient de conductivité thermique est situé dans la gamme allant d'environ 100 à 1100 W/mK.

2. Roue de véhicule selon la revendication 1, **caractérisée en ce que** la structure à fonction thermique (7) est conçue pour absorber et émettre un rayonnement dans le domaine des ondes infrarouges dont la longueur d'onde caractéristique est d'environ 780 nm à 100 µm.

3. Roue de véhicule selon l'une des revendications 1 et 2, **caractérisée en ce que** la structure à fonction thermique (7) contient des fibres de carbone.

4. Roue de véhicule selon l'une des revendications 2 et 3, **caractérisée en ce que** la structure à fonction thermique (7) est conçue comme un véritable corps noir.

5. Roue de véhicule selon l'une des revendications 1 à 4, **caractérisée en ce que** la structure à fonction thermique (7) contient des fibres de carbone (13) à base de brai.

6. Roue de véhicule selon l'une des revendications 1 à 5, **caractérisée en ce que** la structure à fonction thermique (7) est formée d'un tissu de fibres (16), d'un maillage de fibre ou d'une nappe de fibres (19).

7. Roue de véhicule selon la revendication 6, **caractérisée en ce que** le tissu de fibres (16) ou la nappe de fibres (19) est élastique.

8. Roue de véhicule selon l'une des revendications 1 à 7, **caractérisée en ce que** la structure à fonction thermique (7) de la jante de roue (2) et la structure à fonction thermique (7) du disque de roue (7) sont reliées l'une à l'autre.

9. Roue de véhicule selon l'une des revendications 1 à 8, **caractérisée en ce que** la structure à fonction thermique (7) du disque de roue (3) et/ou de la jante de roue (2) s'étend jusque dans ou jusqu'à un côté, opposé au système de freinage (6), du disque de roue (3) et/ou de la jante de roue (2).

10. Roue de véhicule selon l'une des revendications 1 à 9, **caractérisée en ce que** la structure à fonction thermique (7) du disque de roue (3) et/ou de la jante de roue (2) est reliée à un composant thermoconducteur (3) de la roue de véhicule (1).

11. Roue de véhicule selon l'une des revendications 1 à 10, **caractérisée en ce que** la structure à fonction thermique (7) de la jante de roue (2) et/ou la structure à fonction thermique (7) du disque de roue (3) comporte au moins par endroits une couche de recouvrement (20).

12. Roue de véhicule selon la revendication 11, **caractérisée en ce que** la couche de recouvrement (20) est conçue pour être perméable aux rayonnements infrarouges.
